# EUROPÄISCHE PATENTSCHRIFT

(11) **EP 0 676 615 B1**
(45) Veröffentlichungstag und Bekanntmachung des Hinweises auf die Patenterteilung: **27.01.1999**
(21) Anmeldenummer: 95810080.2
(22) Anmeldetag: 07.02.1995
(51) Int. Cl.: G01B 3/28

(54) **Tiefenmessgerät**
Depth measuring device
Appareil de mesure de profondeur

(30) Priorität: 07.04.1994 DE 4411971
(43) Veröffentlichungstag der Anmeldung: 11.10.1995
(73) Patentinhaber: HILTI Aktiengesellschaft, 9494 Schaan (LI)
(72) Erfinder: Mayr, Franz-Paul, D-86949 Hechenwang (DE)
(74) Vertreter: Wildi, Roland

(56) Entgegenhaltungen:
- CH-A- 432 859
- DE-U- 6 600 361
- FR-A- 1 010 000
- FR-A- 2 574 924

## Beschreibung

Die Erfindung betrifft ein Tiefenmessgerät gemäss dem Oberbegriff des Patentanspruchs 1.

Beim Setzvorgang eines Spreizdübels wird der aus Spreizhülse und Spreizkörper bestehende Spreizdübel in ein entsprechendes Bohrloch eingeführt. Anschliessend wird der Spreizkörper zumeist mittels eines speziellen Setzwerkzeuges bis auf ein vorbestimmtes Mass eingetrieben. Achtet der Anwender während des Setzvorganges nicht darauf, dass der Spreizkörper die gewünschte Endlage erreicht, besteht die Gefahr, dass der Spreizdübel nicht richtig verankert wird. Ueberprüft werden kann der Spreizvorgang nur durch das Ausmessen des Abstandes zwischen der rückwärtigen Stirnseite der Spreizhülse und der rückwärtigen Stirnseite des Spreizkörpers. Da ein solches Ausmessen mit einem hohen Aufwand verbunden ist, besteht das Bedürfnis eines geeigneten Tiefenmessgerätes.

Ein Tiefenmessgerät ist beispielsweise aus dem DE-GM 6600361 bekannt, das aus einem Gehäuse mit Anschlagfläche und einer stabförmigen Messeinrichtung mit Mess-Skala besteht, wobei die Messeinrichtung die Anschlagflächen des Gehäuses überragt und in einer zentralen Durchgangsbohrung axial versetzbar ist. Dieses bekannte Tiefenmessgerät dient der Ueberprüfung der Laufflächen von Reifen, wobei die Tiefe des Profils gemessen wird. Bei einem Messvorgang wird die Anschlagfläche des Gehäuses auf die Lauffläche des Reifens gesetzt und die Messeinrichtung in das Profil gedrückt, bis die Messeinrichtung den Boden des Profils erreicht hat. Auf der auf der Messeinrichtung angeordneten Mess-Skala wird am rückwärtigen Endbereich des Gehäuses die Profiltiefe abgelesen.

Zum Ausmessen von Spreizdübeln kann dieses bekannte Tiefenmessgerät nicht verwendet werden.

Abhängig von den geforderten Lastwerten, entsprechend denen Befestigungspunkte ausgelegt werden, kommen Spreizdübel mit unterschiedlichen Durchmessem zur Anwendung. Vom Durchmesser des Spreizdübels hängt die Endlage des Spreizkörpers ab. Das bedeutet, dass der Abstand der rückwärtigen Stirnseite des Spreizkörpers in seiner Endlage gegenüber der rückwärtigen Stirnseite der Spreizhülse zunimmt, je grösser der Durchmesser des Spreizdübels ist. Eine auf äussere Einflussfaktoren abgestimmte Ausmessung ist mit dem aus dem DE-GM 6 600 361 bekannten Tiefenmessgerät nicht möglich.

Der Erfindung liegt die Aufgabe zugrunde, ein Tiefenmessgerät zu schaffen, mit dem eine schnelle, exakte und anwenderfreundliche Ueberprüfung gesetzter Spreizdübel möglich ist.

Erfindungsgemäss wird dies dadurch erreicht, dass das Gehäuse mehrere, hintereinander angeordnete, im wesentlichen rechtwinklig zur Verschieberichtung verlaufende weitere Anschlagflächen aufweist, wobei die Durchmesser der hintereinander angeordneten Auschlagflächen zum freien Ende des Gehäuses hin abnehmen.

Die Anschlagflächen sind dabei derart versetzt zueinander angeordnet, dass die stabförmige Messeinrichtung gegenüber dem Gehäuse bei entsprechend gleicher Lage des Spreizkörpers immer um den gleichen Weg axial versetzt wird, unabhängig davon, welchen Durchmesser der Spreizdübel hat. An der Mess-Skala der Messeinrichtung ist somit immer der gleiche Wert ablesbar.

Damit eine einfache Verwendung des erfindungsgemässen Tiefenmessgerätes gewährleistet ist, sind die Anschlagflächen vorzugsweise stirnseitig an zylindrischen Fortsätzen des Gehäuses angeordnet, wobei die Durchmesser der Fortsätze untereinander und gegenüber dem zylindrischen Gehäuse zum freien Ende hin abnehmen. Die Fortsätze sind somit stufenförmig ausgebildet, wobei jeder Fortsatz einen bestimmten Durchmesser aufweist, der dem Innendurchmesser der Spreizhülse im Bereich der rückwärtigen Stirnseite entspricht.

Bei einem Messvorgang wird das erfindungsgemässe Tiefenmessgerät in einen gesetzten Spreizdübel hineingesteckt. Dabei gelangt zuerst die stabförmige Messeinrichtung mit der rückwärtigen Stirnseite des Spreizkörpers und anschliessend die auf den Durchmesser des Spreizdübels abgestimmte Anschlagfläche des Tiefenmessgerätes mit der rückwärtigen Stirnseite des Spreizdübels in Kontakt. Dabei erfolgt eine axiale Versetzung der Messeinrichtung und der an der Messeinrichtung angeordneten Mess-Skala gegenüber dem Gehäuse des Tiefenmessgerätes. Die Lage des Spreizkörpers ist auf diese Weise am rückwärtigen Endbereich des Gehäuses an der Mess-Skala ablesbar.

Bei einer einfachen Ausgestaltung des Tiefenmessgerätes sind die Fortsätze des Gehäuses zweckmässigerweise zueinander und zum zylindrischen Bereich des Gehäuses koaxial angeordnet. Es ergeben sich somit kreisringförmige Anschlagflächen. Die im Aussendurchmesser unterschiedlichen, hintereinander angeordneten Fortsätze dienen der guten Zentrierung des Tiefenmessgerätes.

Dem leichteren Ablesen dient eine farblich gestaltete Mess-Skala. Beispielsweise können die Farben grün, schwarz und rot für die Gestaltung der Mess-Skala verwendet werden. Die Farbe rot signalisiert, dass sich der Spreizkörper noch nicht in seiner richtigen Endlage befindet. Das weitere Einschlagen des Spreizkörpers in den Spreizdübel ist somit notwendig. Eine grüne Markierung sagt aus, dass eine richtige Verspreizung vorliegt, wobei der Spreizkörper tiefer in den Spreizdübel eingeschlagen wurde, als notwendig. Eine sich zwischen der grünen und roten Markierung befindliche schwarze Markierung ist ein Zeichen dafür, dass der Spreizkörper richtig gesetzt wurde.

Die Erfindung wird anhand einer Zeichnung, die ein Ausführungsbeispiel wiedergibt, näher erläutert.

Das dargestellte Tiefenmessgerät besteht aus einem im wesentlichen zylindrisch ausgebildeten Gehäuse 1 mit einem ersten und zweiten Endbereich. Das Gehäuse 1 ist durchsetzt von einer zentralen Durchgangsbohrung 3, die im ersten Endbereich einen kleineren Durchmesser aufweist, als im zweiten Endbereich. Die Durchgangsbohrung 3 dient der Aufnahme und Führung einer gegenüber dem Gehäuse 1 und gegen die Kraft einer Druckfeder 17 axial versetzbaren Messeinrichtung 5, die im wesentlichen stabförmig ausgebildet ist. Die Messeinrichtung 5 überragt die beiden Endbereiche des Gehäuses 1 und weist einen Aussendurchmesser auf, der im wesentlichen dem Durchmesser der Durchgangsbohrung 3 im ersten Endbereich entspricht. Der im Durchmesser grössere Bereich der Durchgangsbohrung 3 im zweiten Endbereich des Gehäuses 1 dient der Aufnahme und Führung eines dreh- und axialfest mit der Messeinrichtung 5 verbundenen Anschlagrings 22, dessen Aussendurchmesser im wesentlichen auf den Innendurchmesser der Durchgangsbohrung 3 im zweiten Endbereich abgestimmt ist. Dieser im entspannten Zustand an einer Stufe 2 der Durchgangsbohrung 3 anliegende Anschlagring 22 bildet ein erstes Gegenlager, das der axialen Abstützung einer die Messeinrichtung im zweiten Endbereich des Gehäuses 1 umgebenden Druckfeder 17 dient. Das zweite Gegenlager für die Druckfeder 17 wird gebildet von einem Verschlusselement 4, das den stirnseitigen Abschluss des Gehäuses 1 im zweiten Endbereich bildet. Das Verschlusselement 4 ist über eine Gewindeverbindung mit dem Gehäuse 1 verbunden und weist eine Durchtrittsöffnung für Messeinrichtung 5 auf. Gegenüber der Stirnseite 7 des Verschlusselementes 4 ist die Lage einer Mess-Skala 6 der Messeinrichtung 5 veränderbar. Die Mess-Skala 6 weist drei mit den Farben grün, schwarz und rot gestaltete Bereiche auf. Ausgehend vom freien Ende der Messeinrichtung sind in Richtung Anschlagflächen nacheinander die Farben grün, schwarz und rot aufgebracht.

In der gezeichneten Darstellung wird ein Messvorgang eines sich in einer Bohrung 21 eines Untergrundes U befindlichen Spreizdübels 18 aufgezeigt. Dabei liegt eine Anschlagfläche 10 des Gehäuses 1 an der rückwärtigen Stirnseite der Spreizhülse 20 des Spreizdübels 18 an und die Messeinrichtung 5 ragt federbelastet in das Innere des Spreizdübels 18 bis sie an der rückwärtigen Stirnseite des Spreizkörpers 19 zu liegen kommt. Der dargestellte Spreizdübel 18 ist richtig verspreizt und der Spreizkörper 19 befindet sich in der richtigen Endlage. Diese richtige Endlage des Spreizkörpers 19 wird von der Mess-Skala 6 der Messeinrichtung 5 an der Stirnseite 7 des Verschleisselementes 4 mit der Farbe schwarz angezeigt.

Nicht richtig gesetzte Spreizdübel, das heisst unzureichend tief eingetriebene Spreizkörper, werden von der Mess-Skala 6 mit der Farbe rot angezeigt. Das dargestellte Tiefenmessgerät kann für Spreizdübel unterschiedlicher Durchmesser verwendet werden. Da bei Spreizdübeln mit zunehmendem Durchmesser auch der Abstand zwischen der rückwärtigen Stirnseite des Spreizkörpers und der rückwärtigen Stirnseite der Spreizhülse zunimmt, kann durch axial zueinander versetzt angeordnete Anschlagflächen 8, 10, 12, 14, 16 jeweils der gleiche axiale Versatz der Messeinrichtung 5 erreicht werden. Die richtige Endlage der Spreizkörper in den Spreizdübeln unterschiedlicher Durchmesser wird an der Mess-Skala 6 immer gleich angezeigt.

Der besseren Zentrierung des Tiefenmessgerätes beim Einsetzen in den zu prüfenden Spreizdübel 18 dienen Bereiche 9, 11, 13, 15, an denen zumindest teilweise die Anschlagflächen 8, 10, 12, 14, 16 angeordnet sind. Die Bereiche 9, 11, 13, 15 sind auf metrische, amerikanische (UNC) und britische (BSW) Gewindekemdurchmesser abgestimmt. Die Anschlagflächen 8, 10, 12, 14, 16 sind kreisringförmig ausgebildet und axial hintereinander, sowie koaxial zueinander angeordnet. Die Anschlagflächen 8, 10, 12, 14, 16 verlaufen im wesentlichen rechtwinklig zur Längserstreckung des Gehäuses 1.

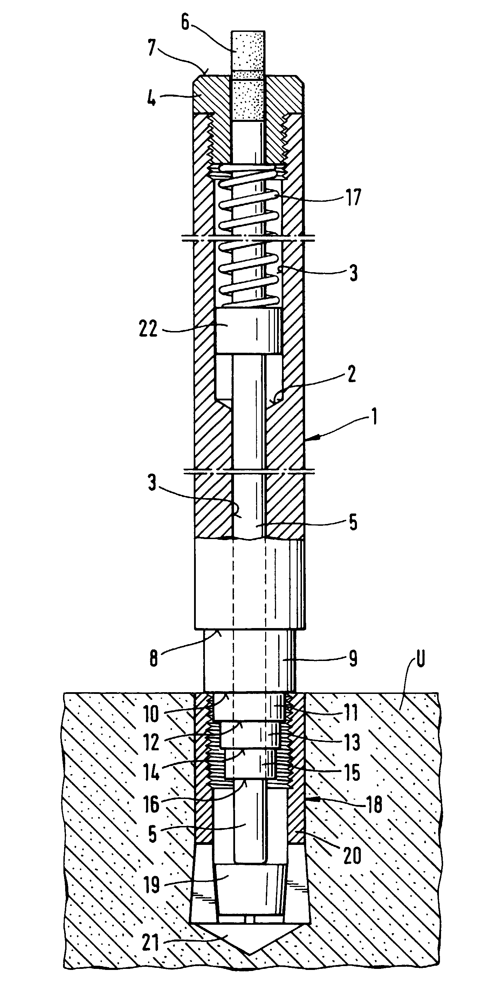

## Patentansprüche

1. Tiefenmessgerät mit einem Gehäuse (1), das eine zentrale Durchgangsbohrung (3) aufweist, in der eine mit einer Mess-Skala (6) versehene, stabförmige Messeinrichtung (5) axial versetzbar ist, die eine an einem Ende des Gehäuses (1) vorgesehene Anschlagfläche (8) axial überragt, **dadurch gekennzeichnet**, dass an dem einen Ende des Gehäuses (1) weitere, im wesentlichen senkrecht zur Versetzrichtung verlaufende Anschlagflächen (10, 12, 14, 16) hintereinander angeordnet sind, wobei die Durchmesser dieser Anschlagflächen (10, 12, 14, 16) zum freien Ende des Gehäuses (1) hin abnehmen.

2. Tiefenmessgerät nach Anspruch 1, dadurch gekennzeichnet, dass das Gehäuse (1) zylindrisch ausgebildet ist und die weiteren Anschlagflächen (10, 12, 14, 16) an zylindrischen Fortsätzen (9, 11, 13, 15) angeordnet sind, die sich in Richtung des freien Endes des Gehäuses (1) erstrecken.

3. Tiefenmessgerät nach Anspruch 2, dadurch gekennzeichnet, dass das Gehäuse (1) und die zylindrischen Fortsätze (9, 11, 13, 15) jeweils koaxial zueinander angeordnet sind.

4. Tiefenmessgerät nach einem der vorangehenden Ansprüche, dadurch gekennzeichnet, dass die Messeinrichtung (5) gegen die Rückstellkraft einer innerhalb des Gehäuses (1) angeordneten Feder (17) versetzbar ist.

5. Tiefenmessgerät nach einem der vorangehenden Ansprüche, dadurch gekennzeichnet, dass die Mess-Skala (6) an einem rückwärtigen Endabschnitt der stabförmigen Messeinrichtung (5) angeordnet ist und im Einsatz nach Massgabe der axialen Versetzung der Messeinrichtung (5) aus einer rückwärtigen Mündung der Durchgangsbohrung (3) ragt.

## Claims

1. A depth measuring instrument having a housing (1) which comprises a central through-hole (3) in which a rod-shaped measuring device (5) is axially displaceable, which measuring device is provided with a measuring scale (6) and which protrudes axially beyond a stop face (8) which is provided at one end of the housing (1), **characterised in that** further stop faces (10, 12, 14, 16), which extend substantially perpendicularly to the direction of displacement, are disposed in series at one end of the housing (1), wherein the diameters of these stop faces (10, 12, 14, 16) decrease towards the free end of the housing (1).

2. A depth measuring instrument according to claim 1, characterised in that the housing (1) is of cylindrical construction and the further stop faces (10, 12, 14, 16) are disposed on cylindrical projections (9, 11, 13, 15) which extend towards the free end of the housing (1).

3. A depth measuring instrument according to claim 2, characterised in that the housing (1) and the cylindrical projections (9, 11, 13, 15) are each disposed coaxially with each other.

4. A depth measuring instrument according to any one of the preceding claims, characterised in that the measuring device (5) can be displaced against the restoring force of a spring (17) disposed inside the housing (1).

5. A depth measuring instrument according to any one of the preceding claims, characterised in that the measuring scale (6) is disposed on a rear end section of the rod-shaped measuring device (5), and when in use protrudes from a rear opening of the through-hole (3) according to the axial displacement of the measuring device (5).

## Revendications

1. Appareil de mesure de profondeur comportant un boîtier (1), qui présente un trou traversant (3) central, dans lequel un dispositif de mesure (5) en forme de barreau, pourvu d'une échelle de mesure (6) est déplaçable axialement et dépasse axialement d'une surface de butée (8), prévue à une extrémité du boîtier (1), caractérisé en ce qu'à une extrémité du boîtier (1) sont disposées l'une derrière l'autre d'autres surfaces de butée (10, 12, 14, 16), s'étendant sensiblement perpendiculairement à la direction de déplacement, les diamètres de ces surfaces de butée (10, 12, 14, 16) diminuant vers l'extrémité libre du boîtier (1).

2. Appareil de mesure de profondeur selon la revendication 1, caractérisé en ce que le boîtier (1) est de conformation cylindrique et les autres surfaces de butée (10, 12, 14, 16) sont disposées sur des prolongement cylindriques (9, 11, 13, 15), qui s'étendent en direction de l'extrémité libre du boîtier (1).

3. Appareil de mesure de profondeur selon la revendication 2, caractérisé en ce que le boîtier (1) et les prolongements cylindriques (9, 11, 13, 15) sont disposés coaxialement les uns par rapport aux autres.

4. Appareil de mesure de profondeur selon l'une des revendications précédentes, caractérisé en ce que le dispositif de mesure (5) est déplaçable à l'encontre de la force de rappel d'un ressort (17) disposé à l'intérieur du boîtier (1).

5. Appareil de mesure de profondeur selon l'une des revendications précédentes, caractérisé en ce que l'échelle de mesure (6) est disposée sur une portion terminale arrière du dispositif de mesure (5) en forme de barreau et ressort, pendant l'utilisation, d'une embouchure arrière du trou débouchant (3), en fonction du déplacement axial du dispositif de mesure (5).
